# EUROPEAN PATENT APPLICATION

(11) **EP 1 633 118 A1**
(43) Date of publication of application: **08.03.2006**
(21) Application number: 05016897.0
(22) Date of filing: 03.08.2005
(51) Int. Cl.: H04M 1/60

(54) **Handsfree system and mobile phone for use within a vehicle**

(30) Priority: 07.09.2004 JP 2004259548
(71) Applicant: DENSO CORPORATION, Kariya-city, Aichi-pref. 488-8661 (JP)
(72) Inventor: Suzuki, Kunikazu, Kariya-city, Aichi-pref., 448-8661 (JP)
(74) Representative: Winter, Brandl, Fürniss, Hübner Röss, Kaiser, Polte Partnerschaft Patent- und Rechtsanwaltskanzlei

(57) **Abstract**

In a handsfree system (1), when a mobile phone (2) receives an incoming voice call from a mobile phone network (4) while data communicating with a device that is an in-vehicle device (handsfree device (3)), the mobile phone is automatically changed from a handset mode to a handsfree mode. Thereby, immediately after the mobile phone receives an incoming voice call from the mobile phone network, the mobile phone can be automatically changed from a handset mode to a handsfree mode without any user's operation.

## Description

The present invention relates to a handsfree system and a mobile phone used in the handsfree system. This handsfree system includes the mobile phone and a device, both of which can communicate with each other using short range wireless communications. The mobile phone has a handset mode and a handsfree mode, both of which are switchable with each other. The device has a data communications function and a handsfree function.

There recently becomes common a mobile phone having a short range wireless communications function, for instance, represented by Bluetooth (registered trademark) communications. This trend causes the mobile phone to be taken in an interior of a vehicle, and further achieves a system where the mobile phone and an in-vehicle device mounted in the vehicle communicate with each other using the short range wireless communications (e.g., refer to Patent Documents 1, 2).
- Patent Document 1: JP-2003-198713 A (US2003/0114202 A1)
- Patent Document 2: JP-2003-218996 A

Suppose a case that a device that communicates with a mobile phone using short range wireless communications is a personal computer having a data communications function and a handsfree function. Here, it can be designed that the mobile phone automatically changes from the handset mode to the handsfree mode when the mobile phone receives an incoming voice call from a mobile phone network while communicating with the personal computer. However, this automatic change from the handset mode to the handsfree mode does not always meet a user's usage pattern.

Suppose another case where a device that communicates with the mobile phone using the short range wireless communications is an in-vehicle device having a data communications function and a handsfree function. In addition, consider a case having an actual condition that a user tends to be legally prohibited from operating a mobile phone during driving. Under these cases, there is a request that a mobile phone should automatically change from the handset mode to the handsfree mode immediately after receiving an incoming voice call during conducting data communications with the in-vehicle device.

The present invention is devised in consideration of the above circumstances. It is an object of the present invention to provide a handsfree system and a mobile phone so that the mobile phone automatically changes from a handset mode to a handsfree mode immediately after receiving an incoming voice call during conducting data communications with an in-vehicle device and thereby operationality is enhanced.

According to a handsfree system of the present invention, the mobile phone changes from the handset mode to the handsfree mode to then conduct a handsfree phone call with the device in a case that the mobile phone detects that the device that communicates data with the mobile phone has a handsfree profile and is an in-vehicle device when the mobile phone receives an incoming voice call from a mobile phone network.

Under this structure, the handsfree system functions as follows: When a mobile phone receives an incoming voice call from a mobile phone network during communicating data with an in-vehicle device, the mobile phone automatically changes from a handset mode to a handsfree mode immediately after receiving the incoming voice call. Therefore, immediately after the mobile phone receives the incoming voice call, the mobile phone can be automatically changed from the handset mode to the handsfree mode without needing user's operation. This enhances operationality of the handsfree system.

According to a first aspect of the handsfree system, the mobile phone associates, with a Bluetooth Device (BD) address obtained from the device, a vehicular flag that indicates whether the device has the handsfree profile and is the in-vehicle device, and determines whether the device has the handsfree profile and is the in-vehicle device by identifying the vehicular flag. Under this structure, the vehicular flag can be associated with or attached to the BD address, so whether the device has the handsfree profile and also is the in-vehicle device is easily determined.

According to another example of the first aspect of the handsfree system, when a user conducts a given operation, the mobile phone sets the vehicular flag to a state indicating that the device has the handsfree profile and is the in-vehicle device. Under this structure, the mobile phone can recognize that the device has the handsfree profile and also is the in-vehicle device by a given operation of a user.

According to yet another example of the first aspect of the handsfree system, when the device has the handsfree profile and is the in-vehicle device, the device notifies the mobile phone that the device has the handsfree profile and is the in-vehicle device, and when the mobile phone is notified by the device that the device has the handsfree profile and is the in-vehicle device, the mobile phone sets the vehicular flag to a state indicating that the device has the handsfree profile and is the in-vehicle device. Under this structure, the mobile phone can recognize that the device has the handsfree profile and also is the in-vehicle device by being notified by the device that the device has the handsfree profile and also is the in-vehicle device.

According to a mobile phone of the present invention, the mobile phone changes from the handset mode to the handsfree mode to then conduct a handsfree phone call with the device in a case that the mobile phone detects that the device that communicates data with the mobile phone has a handsfree profile and is an in-vehicle device when the mobile phone receives an incoming voice call from a mobile phone network.

Under this structure, the same functional effect as that described in Claim 1 can be obtained. Namely, immediately after the mobile phone receives the incoming voice call, the mobile phone can be automatically changed from the handset mode to the handsfree mode without needing user's operation. This enhances operationality.

The above and other objects, features, and advantages of the present invention will become more apparent from the following detailed description made with reference to the accompanying drawings. In the drawings:
FIG. 1 is a functional block diagram showing a handsfree system according to a first embodiment of the present invention;
FIG. 2 is a sequence diagram showing a process flow of the handsfree system according to the first embodiment;
FIG. 3 is another sequence diagram showing a process flow of the handsfree system according to the first embodiment; and
FIG. 4 is a functional block diagram showing a handsfree system according to a second embodiment of the present invention.

### (First Embodiment)

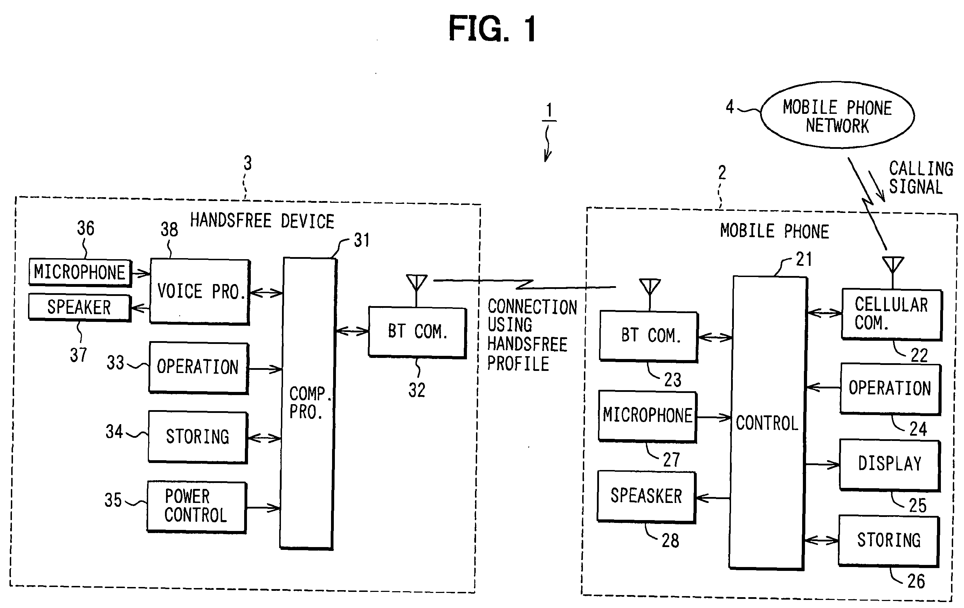

Hereinbelow, a first embodiment of the present invention where a device (in-vehicle device) is a handsfree device will be explained with reference to FiGs. 1 to 3. FIG. 1 schematically shows an overall structure of a handsfree system 1. The handsfree system 1 includes a mobile phone 2 that is carried by a user, and a handsfree device 3 mounted in a vehicle. Here, the mobile phone 2 and the handsfree device 3 are able to communicate with each other by Bluetooth communications.

The mobile phone 2 includes the following: a control unit 21 that controls an overall device; a cellular communications unit 22 that communicates with a mobile phone network 4; a Bluetooth communications unit 23 that Bluetooth communicates with the handsfree device 3; an operation unit 24 that includes multiple keys such as a communications start key for starting communications, a communications stop key for stopping communications, numeral keys from 0 to 9 used for inputting phone numbers; a display unit 25 including, e.g., a liquid crystal display; a storing unit 26 for storing, e.g., a phone directory where phone numbers and personal information are associated with each other and thereby registered; a microphone 27 for being used for inputting transmission voices; and a speaker 28 for outputting reception voices.

The handsfree device 3 includes the following: a computation processing unit 31 for controlling an overall device; a Bluetooth communications unit 32 that Bluetooth communicates with the mobile phone 2; an operation unit 33 that includes multiple keys such as a communications start key for starting communications, a communications stop key for stopping communications, and a communications holding key for holding communications; a storing unit 34 for storing, e.g., a phone directory where phone numbers and personal information are associated with each other and thereby registered; a power control unit 35 for controlling operating power; a microphone 36 for being used for inputting transmission voices; a speaker 37 for outputting reception voices; and a voice processing unit 38 for voice processing the transmission voices or the reception voices.

In the above structure, the mobile phone 2 is switchable between a handset mode and a handsfree mode. In the handset mode, a handset phone call takes place that outputs a reception voice via the speaker 28 while inputting a transmission voice via the microphone 27. In the handsfree mode, a handsfree phone call takes place that outputs a reception voice via the speaker 37 of the handsfree device 3 while inputting a transmission voice via the microphone 36 of the handsfree device 3 by establishing connection with the handsfree device 3.

Here, the mobile phone 2 has a handsfree profile necessary for a handsfree phone call. Only when a communications opponent has the handsfree profile, the mobile phone 2 and the communications opponent can perform the handsfree phone call by using both the handsfree profiles of the mobile phone 2 and the communications opponent. Here, the handsfree profile indicates a capability and a function that enables the mobile phone 2 to conduct in the handsfree mode. Protocols or physical interfaces of the handsfree profile are generally standardized to secure interconnection.

In the mobile phone 2, the control unit 21 manages information relating to a communications opponent with respect to Bluetooth communications as a Bluetooth communications opponent table. In this table, a Bluetooth Device (BD) address and a vehicular flag are managed to one-on-one correspond with each other, or to be associated with each other, with respect to each of communications opponents of Bluetooth communications. Here, the vehicular flag is an index that indicates whether a communications opponent capable of Bluetooth communications has a handsfree profile and also is an in-vehicle device, which should always conduct voice calls using a handsfree mode. The vehicular flag is set by user's given operation or a vehicular flag setting request from a device. The vehicular flag with respect to a device is set to ON (1) when the device has a handsfree profile and also is an in-vehicle device. The vehicular flag with respect to the device is set to OFF (0) when the device has no handsfree profile or is not an in-vehicle device. In this embodiment, the handsfree device 3 is an in-vehicle device and also a communications opponent of the mobile phone 2. Therefore, when the handsfree device 3 has a handsfree profile, the vehicular flag corresponding to the BD address of the handsfree device 3 is set to ON.

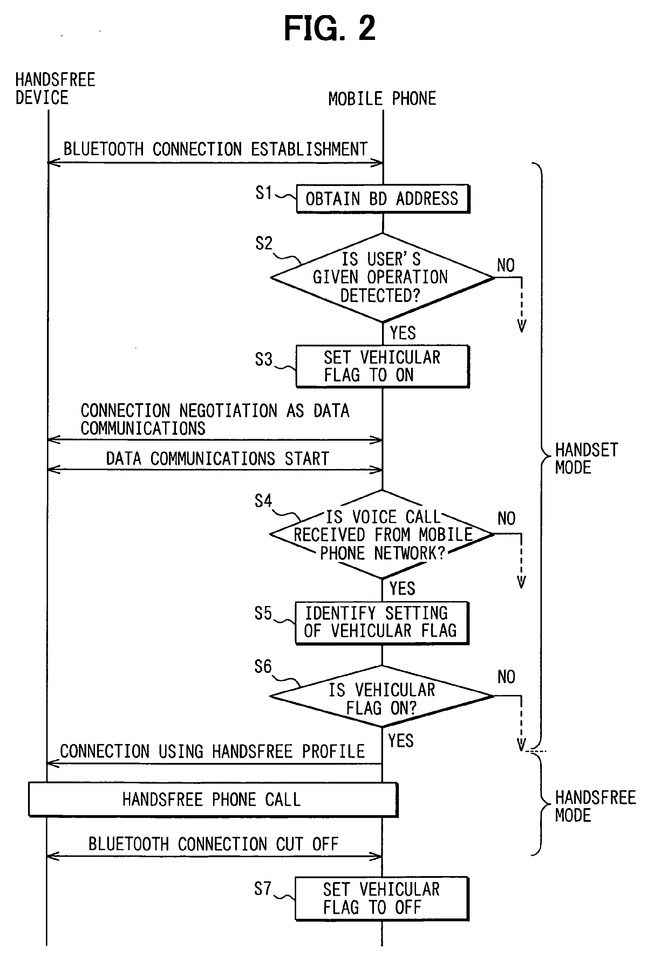

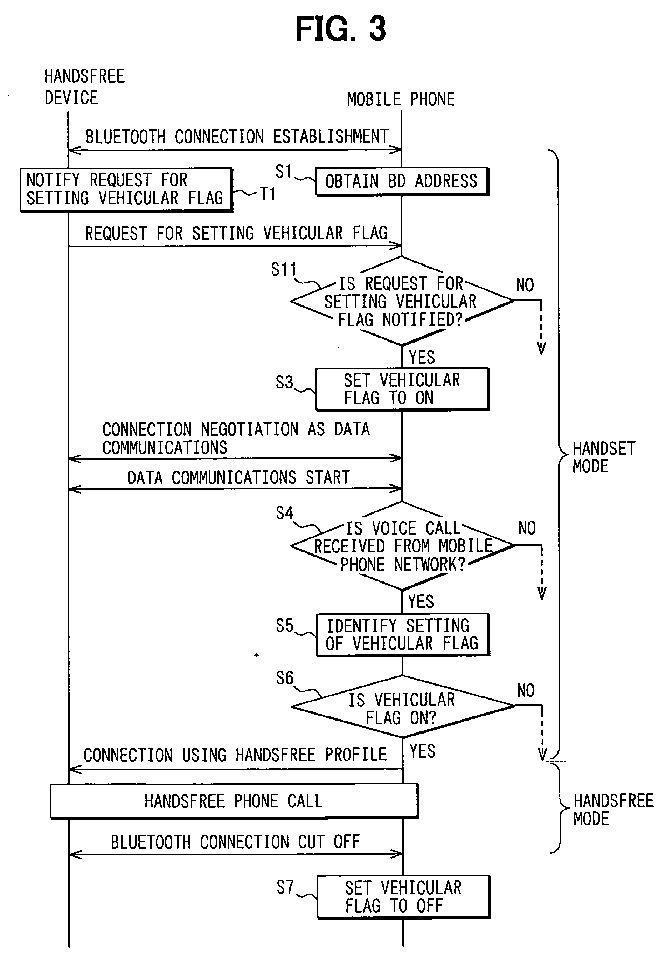

Next, a function of the above structure will be explained with reference to FIGs. 2, 3. Here, assume that the vehicular flag is set to OFF as a default value. The following: (1) Case where a vehicular flag is set by a given operation of a user and (2) Case where a vehicular flag is set by a vehicular flag setting request from a handsfree device 3, will be explained in order.

### (1) Case where a vehicular flag is set by a given operation of a user

FIG. 2 is used for explanation below. In the mobile phone 2, the control unit 21 obtains a BD address of the handsfree device 3 from the handsfree device 3 (Step S1) after Bluetooth communications is established with the handsfree device 3 using the Bluetooth communications unit 23. Here, a user determines whether the handsfree device 3 has a handsfree profile, and conducts a given operation using the operation unit 24 for setting the vehicular flag to ON when the user determines that the handsfree device 3 has a handsfree profile.

Following this, when the control unit 21 detects that the user's given operation for setting the vehicular flag to ON (Step S2: YES), the control unit 21 changes the vehicular flag with respect to the handsfree device 3 from OFF to ON (Step S3). The control unit 21 then conducts connection negotiation as data communications with the handsfree device 3. When the connection negotiation normally finishes, the control unit 21 starts data communications with the handsfree device 3.

Here, suppose a case where the mobile phone 2 receives an incoming voice call from the mobile phone network 4. In detail, suppose a case where the cellular communications unit 22 receives from the mobile phone network 4 a calling signal whose recipient is the mobile phone 2 while the control unit 21 is data communicating with the handsfree device 3. In the cases, when the mobile phone 2 detects receiving an incoming voice call from the mobile phone network 4 (Step S4: YES), the setting of the vehicular flag with respect to the handsfree device 3 is identified at this moment (Step S5). When the control unit 21 detects that setting of the vehicular flag at this moment with respect to the handsfree device 3 is ON (Step S6: YES), the control unit 21 conducts a handsfree phone call by connecting using the handsfree profile.

In this case, the control unit 21 can automatically start a handsfree phone call with the handsfree device 3 after outputting an incoming sound (or calling ring) from the handsfree device 3. Otherwise the control unit 21 can start a handsfree phone call with the handsfree device 3 in a case where the user conducts a given operation responding to an incoming call after outputting an incoming sound from the handsfree device 3. Furthermore, it can be structured that the control unit 21 outputs the incoming sound from the mobile phone 2 without limiting to outputting the incoming sound from the handsfree device 3.

Then, when the control unit 21 finishes the handsfree phone call with the handsfree device 3, the control unit 21 cuts off (opens) the Bluetooth connection with the handsfree device 3 established by the Bluetooth communications unit 23. Then, the control unit 21 changes the vehicular flag with respect to the device from ON to OFF (Step S7).

### (2) Case where a vehicular flag is set by a vehicular flag setting request from a handsfree device 3

FIG. 3 is used for explanation below. In the handsfree device 3, the computation processing unit 31 notifies the mobile phone 2 via the Bluetooth communications unit 32 of a vehicular flag setting request (Step T1) after Bluetooth communications is established with the mobile phone 2 by the Bluetooth communications unit 32. Following this, in the mobile phone 2, when the control unit 21 detects that the vehicular flag setting request is notified (Step S11: YES), the control unit 21 changes the vehicular flag with respect to the handsfree device 3 from OFF to ON (Step S3). The control unit 21 then conducts the same Steps S4 to S7 described above.

As explained above, according to the first embodiment, the handsfree system 1 functions as follows: The mobile phone 2 receives an incoming voice call from the mobile phone network 4 during communicating data with a device. Here, when the device that communicates data with the mobile phone 2 is an in-vehicle device (handsfree device 3), the mobile phone 2 automatically changes from a handset mode to a handsfree mode immediately after receiving the incoming voice call. Therefore, immediately after the mobile phone 2 receives an incoming voice call, the mobile phone 2 can be automatically changed from a handset mode to a handsfree mode without needing user's operation. This enhances operationality of the handsfree system 1.

### (Second Embodiment)

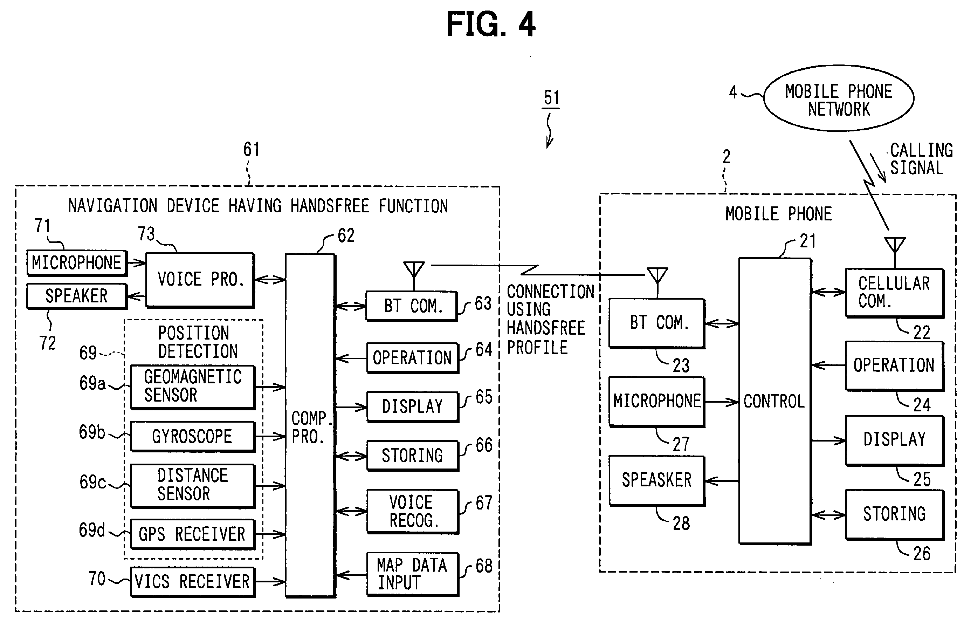

Next, a second embodiment of the present invention will be explained with reference to FIG. 4. The same parts as those of the first embodiment will be not explained, but different parts will be explained below. In the second embodiment, a handsfree system 51 includes a mobile phone 2 and a navigation device 61 having a handsfree function (hereinbelow, referred to as a navigation device). Here, the mobile phone 2 and the navigation device 61 are able to communicate with each other using Bluetooth communications.

Here, the navigation device 61 includes the following: a computation processing unit 62 for controlling an overall device; a Bluetooth communications unit 63 that Bluetooth communicates with the mobile phone 2; an operation unit 64 that includes touch keys displayed on a display unit 65; the display unit 65 such as a liquid crystal display; a storing unit 66 that stores destination information or the like; a voice recognition unit 67 that conducts voice recognition process; a map data input unit 68 that is used for inputting map data; a position detection unit 69 that includes a geomagnetic sensor 69a, a gyroscope 69b, a distance sensor 69c, and a GPS receiver 69d; a VICS receiver 70 that receives VICS information; a microphone 71 that receives a transmission voice, a speaker 72 that outputs a reception voices; and a voice processing unit 73 that performs voice processing for the reception voice and the transmission voice.

Under this structure, the mobile phone 2 and the navigation device 61 perform the same process as the process performed by the mobile phone 2 and the handsfree device 3 of the first embodiment. Therefore, the handsfree system 51functions as follows: The mobile phone 2 receives an incoming voice call from the mobile phone network 4 during communicating data with a device. Here, when the device that communicates data with the mobile phone 2 is an in-vehicle device (navigation device 61), the mobile phone 2 automatically changes from a handset mode to a handsfree mode immediately after receiving the incoming voice call. Therefore, immediately after the mobile phone 2 receives an incoming voice call, the mobile phone 2 can be automatically changed from a handset mode to a handsfree mode without needing user's operation. This enhances operationality of the handsfree system 51.

The present invention is not limited to only the above-described embodiments, but the present invention can be modified or expanded as follows.

A device having a handsfree function can have a different structure.

In a mobile phone, after the Bluetooth communications is cut off, the vehicular flag with respect to the handsfree device 3 does not need to be changed from ON to OFF, but the vehicular flag with respect to the handsfree device 3 can remain in ON.

It will be obvious to those skilled in the art that various changes may be made in the above-described embodiments of the present invention. However, the scope of the present invention should be determined by the following claims.

## Claims

1. A handsfree system (1, 51) including:
a mobile phone (2) that is switchable between a handset mode and a handsfree mode; and
a device (3, 61) that has a data communications function and a handsfree function, wherein the mobile phone and the device are able to conduct short range wireless communications,
the handsfree system **characterized in that**:
the mobile phone changes from the handset mode to the handsfree mode to then conduct a handsfree phone call with the device
in a case that the mobile phone detects that the device that communicates data with the mobile phone has a handsfree profile and is an in-vehicle device when the mobile phone receives an incoming voice call from a mobile phone network (4).

2. The handsfree system of Claim 1,
wherein the mobile phone and the device are able to conduct Bluetooth communications with each other,
wherein the mobile phone associates, with a BD address obtained from the device, a vehicular flag that indicates whether the device has the handsfree profile and is the in-vehicle device, and
wherein the mobile phone determines whether the device has the handsfree profile and is the in-vehicle device by identifying the vehicular flag.

3. The handsfree system of Claim 2,
wherein, when a user conducts a given operation, the mobile phone sets the vehicular flag to a state indicating that the device has the handsfree profile and is the in-vehicle device.

4. The handsfree system of Claim 2,
wherein, when the device has the handsfree profile and is the in-vehicle device, the device notifies the mobile phone that the device has the handsfree profile and is the in-vehicle device, and
wherein when the mobile phone is notified by the device that the device has the handsfree profile and is the in-vehicle device, the mobile phone sets the vehicular flag to a state indicating that the device has the handsfree profile and is the in-vehicle device.

5. A mobile phone (2) that is switchable between a handset mode and a handsfree mode and is able to conduct short range wireless communications with a device (3, 61) that has a data communications function and a handsfree function,
the mobile phone **characterized in that**:
the mobile phone changes from the handset mode to the handsfree mode to then conduct a handsfree phone call with the device
in a case that the mobile phone detects that the device that communicates data with the mobile phone has a handsfree profile and is an in-vehicle device when the mobile phone receives an incoming voice call from a mobile phone network (4).
